# EUROPEAN PATENT APPLICATION

(11) **EP 4 560 723 A1**
(43) Date of publication of application: **28.05.2025**
(21) Application number: 24215047.2
(22) Date of filing: 25.11.2024
(51) Int. Cl.: H01M 4/131, H01M 4/1391, H01M 4/36, H01M 4/505, H01M 4/525, H01M 10/0525

(54) **POSITIVE ELECTRODE ACTIVE MATERIALS AND RECHARGEABLE LITHIUM BATTERIES**

(30) Priority: 27.11.2023 KR 20230166924
(71) Applicant: SAMSUNG SDI CO., LTD., Yongin-si, Gyeonggi-do 17084 (KR)
(72) Inventor: SEONG, Wonmo, 17084 Yongin-si, Gyeonggi-do (KR); HASE, Naoyuki, 17084 Yongin-si, Gyeonggi-do (KR); HA, Jihoon, 17084 Yongin-si, Gyeonggi-do (KR)
(74) Representative: Meissner Bolte Partnerschaft mbB

(57) **Abstract**

Disclosed are a positive electrode active material, and a rechargeable lithium battery, the positive electrode active material including a first positive electrode active material including a first lithium-manganese-rich composite oxide in which a molar ratio of lithium to a total metal excluding lithium is about 1.06 to about 1.2 and a manganese content based on 100 mol% of a total metal excluding lithium is greater than or equal to about 30 mol%, and a second positive electrode active material including a second lithium-manganese-rich composite oxide in which a molar ratio of lithium to a total metal excluding lithium is greater than about 1.2 and less than or equal to about 2 and a manganese content based on 100 mol% of a total metal excluding lithium is greater than or equal to about 30 mol%, and having an average particle diameter (D₅₀) smaller than an average particle diameter (D₅₀) of the first positive electrode active material.

## Description

### BACKGROUND

### 1. Field

Positive electrode active materials and rechargeable lithium batteries including the same are disclosed.

### 2. Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive electrode active materials have been investigated to realize rechargeable lithium batteries for applications to the uses. Among them, lithium nickel-based oxide, lithium nickel manganese cobalt composite oxide, lithium nickel cobalt aluminum composite oxide, and lithium cobalt oxide are mainly used as positive electrode active materials. However, while the demand for large-sized, high-capacity, or high-energy-density rechargeable lithium batteries has recently increased, the supply of a positive electrode active material containing cobalt, a rare metal, is expected to be severely short. In other words, because cobalt is expensive and there are not many remaining reserves, there are needs for developing positive electrode active materials that exclude cobalt or reduce its content.

### SUMMARY

The present invention provides a lithium-manganese-rich positive electrode active material that realizes high capacity and improved bulk density, enabling high capacity per volume and long cycle-life characteristics, and a rechargeable lithium battery including the same.

A positive electrode active material according to the invention includes a first positive electrode active material including a first lithium-manganese-rich composite oxide in which a molar ratio of lithium to a total metal excluding lithium is about 1.06 to about 1.2 and a manganese content based on 100 mol% of a total metal excluding lithium is greater than or equal to about 30 mol%, and a second positive electrode active material including a second lithium-manganese-rich composite oxide in which a molar ratio of lithium to a total metal excluding lithium is greater than about 1.2 and less than or equal to about 2 and a manganese content based on 100 mol% of a total metal excluding lithium is greater than or equal to about 30 mol%, and having an average particle diameter (D₅₀) smaller than an average particle diameter (D₅₀) of the first positive electrode active material.

The present invention provides a rechargeable lithium battery including a positive electrode including the positive electrode active material of the invention, a negative electrode, and an electrolyte.

The positive electrode active material maximizes capacity while minimizing the production price, and minimizes the disadvantages of the low density of the lithium-manganese-rich positive electrode active material while maintaining advantages of high capacity, thereby providing high capacity and high density and realizing high capacity per volume and excellent high-temperature cycle-life characteristics.

### BRIEF DESCRIPTION OF THE DRAWINGS

FIGS. 1 to 4 are cross-sectional views schematically showing a lithium rechargeable battery according to some embodiments.
FIG. 5 is a graph showing the capacity retention rates according to the number of cycles as cycle-life characteristics evaluation results for the battery cell including the mixed positive electrode active material of Example 1, the battery cell including only the first positive electrode active material of Example 1, and the battery cell including only the second positive electrode active material of Example 1.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode Active Material

In some embodiments, a positive electrode active material includes a first positive electrode active material including a first lithium-manganese-rich composite oxide in which a molar ratio of lithium to a total metal excluding lithium is about 1.06 to about 1.2 and a manganese content based on 100 mol% of a total metal excluding lithium is greater than or equal to about 30 mol%, and a second positive electrode active material including a second lithium-manganese-rich composite oxide in which a molar ratio of lithium to a total metal excluding lithium is greater than about 1.2 and less than or equal to about 2 and a manganese content based on 100 mol% of a total metal excluding lithium is greater than or equal to about 30 mol%, and having an average particle diameter (D₅₀) smaller than an average particle diameter (D₅₀) of the first positive electrode active material.

The positive electrode active material according to some embodiments may be said to be a lithium-manganese-rich (LMR)-based positive electrode active material, and may also be expressed as including a lithium-manganese-rich composite oxide. The LMR material, which is a layered positive electrode active material including lithium in an excessive amount and manganese in a relatively high relatively content, expresses high capacity by a new principle of oxygen oxidation-reduction (O-redox) as well as capacity by conventional transition metal oxidation-reduction and simultaneously, has a high ratio of low-cost manganese and thus is attracting attentions as an ultra-low-cost next generation positive electrode active material. The LMR material may be defined as a composite oxide with a layered structure, which has specifically a molar ratio of lithium to a total metal excluding the lithium of greater than about 1 and less than or equal to about 2 and a manganese content of greater than or equal to about 30 mol% based on about 100 mol% of the total metal excluding the lithium. The LMR material excessively includes lithium and thus has completely different characteristics from the conventional layered positive electrode active material and a different composition therefrom, to which a new mechanism of O-redox may be applied.

However, because the LMR material has a higher proportion of lithium and manganese than the conventional positive electrode active material, as a ratio of LiCoO₂ having high theoretical volume density (bulk density, about 4.9 g/cc) and LiNiO₂ having high theoretical volume density (about 4.6 g/cc) decreases, while a ratio of LiMnO₂ having low theoretical volume density (about 4.04 g/cc) and Li₂MnO₃ having low theoretical volume density (about 3.7 g/cc) increases, the LMR material has lower volume density than the conventional layered material, which is a disadvantage in terms of total energy density (Wh/L) despite expressing high capacity (mAh/g),

Some embodiments propose a new positive electrode active material that may not only minimize the disadvantage of low volume density of the LMR material and simultaneously, while maintaining the advantage of expressing high capacity. The positive electrode active material according to some embodiments may not only be ultra-low-coat, economical, and highly mass-producible and implement high capacity according to oxidation-reduction of oxygen but also exhibit increased volume density and thus improved capacity per volume, and accordingly, a rechargeable lithium battery to which the positive electrode active material is applied may be mounted on an electric vehicle or a hybrid vehicle to achieve long-distance driving. According to some embodiments, a positive electrode active material, in which first and second positive electrode active materials are mixed, compared with a positive electrode active material composed of a single type, may exhibit improved volume density and simultaneously maintain high capacity, in which the advantage of LMR material may be maximized.

Based on a total of 100 wt% of the first positive electrode active material and the second positive electrode active material, the first positive electrode active material may be included in an amount of greater than about 50 wt% and less than about 100 wt% for example about 60 wt% to about 95 wt%, about 70 wt% to about 95 wt%, or about 80 wt% to about 90 wt% and the second positive electrode active material may be included in an amount of greater than about 0 wt% and less than about 50 wt%, for example about 5 wt% to about 40 wt%, about 5 wt% to about 30 wt%, or about 10 wt% to about 20 wt%. When mixed at the above ratio, energy density can be maximized while realizing high capacity and cycle-life characteristics can be improved.

The first positive electrode active material is in the form of particles having an average particle diameter (D₅₀) larger than the average particle diameter (D₅₀) of the second positive electrode active material, and may be expressed as opposites or opposites. The average particle diameter (D₅₀) of the first positive electrode active material may be greater than or equal to about 5 µm, for example greater than or equal to about 5 µm and less than or equal to about 20 µm, about 6 µm to about 15 µm, or about 7 µm to about 12 µm. The first positive electrode active material may be in the form of secondary particles made by agglomerating a plurality of primary particles.

The second positive electrode active material is in the form of particles having an average particle diameter (D₅₀) smaller than the average particle diameter (D₅₀) of the first positive electrode active material, and may be expressed as small particles. The average particle diameter (D₅₀) of the second positive electrode active material may be less than or equal to about 7 µm, for example, greater than or equal to about 1 µm and less than or equal to about 7 µm, greater than or equal to about 1 µm and less than about 7 µm, greater than or equal to about 1 µm and less than or equal to about 6.5 µm, about 2 µm to about 6.5 µm, or about 3 µm to about 6 µm. The second positive electrode active material may be in the form of secondary particles made by agglomerating a plurality of primary particles, may be single particles, or may be a mixture thereof. When a second positive electrode active material in the form of single particles is applied, cycle-life characteristics and cycle stability can be improved.

The single particles may exist alone without a grain boundary within the particle, is composed of one particle, and may be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal. The single particles may exist alone, or single particles may be agglomerated together. For example, 2 to 10 single particles may be agglomerated and in contact with each other.

Because the first positive electrode active material is a LMR material and corresponds to large particles, in some embodiments, the amounts of Mn and Li that deteriorate volume density in the first positive electrode active material are minimized to improve volume density of the entire positive electrode active material, and O-Redox is less used to improve cycle-life characteristics and stability of the positive electrode active material.

The second positive electrode active material is also a LMR material and corresponds to small particles and may play a role of increasing total capacity and improving cycle-life characteristics and despite low volume density in itself, minimize pores by being located in empty spaces of the large particles and thus minimize the density deterioration. In some embodiments, a ratio of Mn in the second positive electrode active material may be increased to lower a cost of the material.

Specifically, the first lithium-manganese-rich composite oxide of the first positive electrode active material is characterized to have a molar ratio of lithium to the total metal excluding the lithium in a range of greater than or equal to about 1.06 and less than or equal to about 1.2, for example, greater than about 1.06 and less than or equal to about 1.2, greater than or equal to about 1.1 to less than or equal to about 1.2, greater than about 1.1 and less than or equal to about 1.2, or greater than or equal to about 1.1 and less than or equal to about 1.15. The second lithium-manganese-rich composite oxide of the second positive electrode active material is characterized to have a molar ratio of lithium to the total metal excluding the lithium in a range of greater than about 1.2 to less than or equal to about 2, for example, greater than about 1.2 to less than or equal to about 1.8, greater than about 1.2 to less than or equal to about 1.5, greater than or equal to 1.25 to less than or equal to about 1.5, or greater than or equal to about 1.3 and less than or equal to about 1.45. In the first positive electrode active material, large particles, lithium is applied thereto excessively but in a minimum content to minimize the deterioration of volume density of the active material, and in addition, an O-redox ratio is reduced to suppress a gas generation amount and metal elution and improve an average voltage drop (voltage decay), and in the second positive electrode active material, small particles, the lithium content may be further increased to maintain high capacity according to the application of O-redox. In other words, the first and second positive electrode active materials are respectively designed to have the above mole ratios of lithium to total metals excluding the lithium to simultaneously increase discharge capacity (mAh/g) and volume density (g/cc) and thus improve capacity per volume (mAh/cc) and thereby, increase energy density (Wh/L) and furthermore improve cycle-life characteristics.

In addition, for example, the first lithium-manganese-rich composite oxide of the first positive electrode active material may have a nickel content of about 45 mol% or more based on about 100 mol% of the total metal excluding lithium, and the second lithium-manganese-rich composite oxide of the second positive electrode active material may have a nickel content of less than about 45 mol% based on about 100 mol% of the total metal excluding lithium. In other words, the first positive electrode active material may be a mid-nickel LMR material having a medium nickel content, and the second positive electrode active material may be a low-nickel LMR material having a relatively low nickel content. The first positive electrode active material, large particles, may be minimized from the deterioration of volume density by increasing an Ni content but lowering an Mn content and suppressed from a gas generation amount and metal elution and improve the average voltage drop problem by less using O-redox to. A cost of the second positive electrode active material, small particles, is reduced by decreasing the Ni content but increasing the Mn content, while maintaining the advantage of LMR, which exhibits high capacity,.

For example, the first lithium-manganese-rich composite oxide of the first positive electrode active material may have a nickel content of greater than or equal to about 45 mol% (e.g. 45 mol% to 70 mol%) and a manganese content of less than or equal to about 55 mol% (e.g. 30 mol% to 55 mol%) based on total 100 mol% of nickel and manganese in the first lithium-manganese-rich composite oxide and specifically, a nickel content of about 45 mol% to about 65 mol% and a manganese content of about 35 mol% to about 55 mol%, or a nickel content of about 50 mol% to about 60 mol% and a manganese content of about 40 mol% to about 50 mol%.

In addition, the second lithium-manganese-rich composite oxide of the second positive electrode active material may have a nickel content of about 10 mol% to less than about 45 mol% and a manganese content of greater than about 55 mol% to about 90 mol% based on about 100 mol% of nickel and manganese in the second lithium-manganese-rich composite oxide and specifically, a nickel content of about 20 mol% to less than about 45 mol% and a manganese content of greater than about 55 mol% to about 80% or a nickel content of about 25 mol% to about 40 mol% and a manganese content of about 60 mol% to about 75%.

The first and second positive electrode active materials are respectively designed to have an Ni and Mn ratio as above to simultaneously increase initial discharge capacity (mAh/g) and volume density (g/cc) and thus improve capacity per volume (mAh/cc), thereby enhancing cycle-life characteristics.

Meanwhile, in the entire mixture of the first positive electrode active material and the second positive electrode active material, a molar ratio of lithium to a total metal excluding lithium may be about 1.1 to about 1.3, for example, about 1.1 to about 1.2. Additionally, the nickel content may be about 35 mol% to about 65 mol%, or about 40 mol% to about 55 mol%, and the manganese content may be about 35 mol% to about 65 mol%, or about 45 mol% to about 60 mol% based on total 100 mol% of nickel and manganese.

The first lithium-manganese-rich composite oxide of the first positive electrode active material may be, for example, represented by a metal oxide including at least one of Chemical Formula 1 and Chemical Formula 2.

[Chemical Formula 1] Li₁₊ₓ₁(Ni_{y1}Mn_{z1}M¹_{1-y1-z1})₁₋ₓ₁O₂-_{b1}X¹_{b1}

In Chemical Formula 1, 0.03≤x1≤0.09, 0.45≤y1≤0.7, 0.3≤z1≤0.55, and 0≤b1≤0.1, M¹is one or more element selected from Al, B, Ba, Ca, Ce, Cr, Fe, Mg, Mo, Nb, Si, Sn, Sr, Ti, V, W, Y, and Zr, and X¹ is one or more element selected from F, P, and S.

[Chemical Formula 2] (1-x2)(LiNi_{y2}Mn_{z2}M²_{1-y2-z2}O_{2-b2}X²_{b2})+x2(Li₂(Mnₜ₁M²₁₋ₜ₁)O_{3-b3}X²_{b3})]

In Chemical Formula 2, 0.06≤x2≤0.2, 0.5≤y2≤1.0, 0≤z2≤0.5, 0≤b2≤0.1, 0.9≤t1≤1 and 0≤b3≤0.1, M² is one or more element selected from Al, B, Ba, Ca, Ce, Cr, Fe, Mg, Mo, Nb, Si, Sn, Sr, Ti, V, W, Y, and Zr, and X² is one or more element selected from F, P, and S.

Chemical Formula 1 represents a solid-solution phase and Chemical Formula 2 represents a composite phase. The first lithium-manganese-rich composite oxide may be represented, for example, by a combination of Chemical Formula 1 and Chemical Formula 2 at room temperature, in which case both a solid-solution phase and a composite phase are included and may be, for example, a material in which a composite and a solid solution are mixed, or a material in which a composite and a solid solution coexist competitively. In this case, the oxygen in the structure of the first lithium-manganese-rich composite oxide can exist relatively stably, and therefore there is less structural change due to oxygen defects during the charging and discharging process, and the problem of voltage drop due to oxygen generation and structural deterioration can be effectively solved.

The second lithium-manganese-rich composite oxide of the second positive electrode active material may be represented by at least one of Chemical Formula 3 and Chemical Formula 4, and may be, for example, represented by either Chemical Formula 3 or Chemical Formula 4. Chemical Formula 3 represents a solid-solution phase and Chemical Formula 4 represents a composite phase. As an example, the second lithium-manganese-rich composite oxide may be represented by Chemical Formula 4.

[Chemical Formula 3] Li₁₊ₓ₃(Ni_{y3}M_{nz}3M³_{1-y3-z3})₁₋ₓ₃O_{2-b4}X³_{b4}

In Chemical Formula 3, 0.09<x3≤0.33, 0.1 ≤y3<0.45, 0.55<z3≤0.9, and 0≤b4≤0.1, M³ is one or more element selected from Al, B, Ba, Ca, Ce, Cr, Fe, Mg, Mo, Nb, Si, Sn, Sr, Ti, V, W, Y, and Zr, and X³ is one or more element selected from F, P, and S.

[Chemical Formula 4] (1-x4)(LiNi_{y4}Mn_{z4}M⁴_{1-y4-z4}O_{2-b5}X⁴_{b5})+x4(Li₂(Mnₜ₂M⁴₁₋ₜ₂)O_{3-b6}X⁴_{b6})]

In Chemical Formula 4, 0.2<x4≤1, 0.5≤y4≤1.0, 0≤z4≤0.5, 0≤b5≤0.1, 0.9≤t2≤1 and 0≤b6≤0.1, M⁴ is one or more element selected from Al, B, Ba, Ca, Ce, Cr, Fe, Mg, Mo, Nb, Si, Sn, Sr, Ti, V, W, Y, and Zr, and X⁴ is one or more element selected from F, P, and S.

In each of the first lithium-manganese-rich composite oxide and the second lithium-manganese-rich composite oxide, a cobalt content based on 100 mol% of a total metal excluding lithium may be about 0 mol% to about 1 mol%, or about 0 mol% to about 0.1 mol%, or about 0 mol% to about 0.01 mol%.

Meanwhile, a difference between the average particle diameter (D₅₀) of the first positive electrode active material and the average particle diameter (D₅₀) of the second positive electrode active material, that is, the latter minus the electron, may be less than or equal to about 6 µm. As for conventional layered positive electrode materials such as lithium nickel-based composite oxide, lithium cobalt oxide, or the like, many attempts to increase energy density by mixing large particles and small particles have been made, wherein whether or not a difference of the particle diameters is large or small has no significant influence on resistance or other performances, but if the LMR material according to some embodiments has too large a difference of particle diameters of large particles and small particles (e.g., greater than about 6 µm), capacity may be rather deteriorated, or at least no increase in capacity may appear according to the mixing of large and small particles. This is understood that as resistance difference between the large and small particles increases, ions flow toward low resistance. Accordingly, in some embodiments, the large particles and the small particles are designed to have an average particle diameter difference of less than or equal to about 6 µm to maximize capacity and also, improve volume density.

A value obtained by subtracting the average particle diameter (D₅₀) of the second positive electrode active material from the average particle diameter (D₅₀) of the first positive electrode active material may be, for example about 1 µm to about 6 µm, about 2 µm to about 5 µm, or about 2.5 µm to about 4.5 µm. By appropriately adjusting the difference in average particle diameter between large particles and small particles within the range, high capacity can be realized and energy density can be improved by simultaneously increasing volume density.

As described above, the positive electrode active material according to some embodiments can achieve high pellet density. For example, the pellet density of the positive electrode active material may be greater than or equal to about 2.9 g/cc, for example, about 2.9 g/cc to about 3.7 g/cc, about 2.9 g/cc to about 3.6 g/cc, or about 2.9 g/cc to about 3.5 g/cc. A rechargeable lithium battery to which such a positive electrode active material is applied may realize high energy density. The pellet density may be measured in the following method. The positive electrode active material is weighed and taken by 3 g and then, put into a mold (an area: about 1.298 cm²), and a mold bar is slowly inserted into a mold body. After placing the mold set in a hydraulic press and then, pressing it with a pressure of about 3.3 tons (Metric ton) for about 30 seconds, its height is measured to obtain the pellet density.

Meanwhile, the first positive electrode active material, which is large particles, may have an a lattice constant of greater than or equal to about 2.865 Å, for example, greater than or equal to about 2.865 Å, greater than or equal to about 2.870 Å, or about 2.875 Å to about 2.885 Å in X-ray diffraction analysis (XRD). For example, the a lattice constant of the first positive electrode active material may be greater than or equal to about 2.875 Å. Additionally, a ratio of the c lattice constant to the a lattice constant may be less than or equal to about 4.968, for example, less than or equal to about 4.965, less than or equal to about 4.960, and may be about 4.955 to about 4.965. When applying the first positive electrode active material whose a lattice constant and the ratio of c lattice constant to a lattice constant satisfies the above ranges, energy density can be effectively improved by minimizing the problem of lowering the bulk density of the LMR material.

In addition, the first positive electrode active material and the second positive electrode active material may each have a surface residual lithium content of less than or equal to about 0.3 wt%, for example, less than or equal to about 0.2 wt%, less than or equal to about 0.1 wt%, or about 0.001 wt% to about 0.1 wt%. This may be distinguished from high-nickel-based materials with a nickel content exceeding about 70 mol%.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types of positive electrode active materials in addition to the aforementioned positive electrode active material. Additionally, the positive electrode active material layer may optionally further include a binder, a conductive material, or a combination thereof.

According to some embodiments, a loading level of the positive electrode active material layer may be about 10 mg/cm² to about 40 mg/cm², for example about 10 mg/cm² to about 30 mg/cm², or about 10 mg/cm² to about 20 mg/cm². Additionally, a density of the positive electrode active material layer in the final compressed positive electrode may be about 2.6 g/cc to about 3.7 g/cc, for example about 2.6 g/cc to about 3.6 g/cc, or about 2.8 g/cc to about 3.58 g/cc. When applying the positive electrode active material according to some embodiments, it is advantageous to implement such a loading level and positive electrode density, and a positive electrode that satisfies the loading level and positive electrode density in the above range is suitable for implementing a high-capacity, high-energy-density rechargeable lithium battery.

The positive electrode according to some embodiments may be able to implement high capacity (mAh/g) and at the same time high bulk density (g/cc), and accordingly, the capacity per volume of the positive electrode may be greater than or equal to about 550 mAh/cc, for example, greater than or equal to about 560 mAh/cc, greater than or equal to about 570 mAh/cc, greater than or equal to about 580 mAh/cc, and about 550 to about 650 mAh/cc, or about 580 to about 630 mAh/cc.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Each content of the binder and the conductive material may be about 0.5 wt% to about 5 wt% based on 100 wt% of the positive electrode active material layer.

The positive electrode current collector may include Al, and the like, but is not limited thereto.

### Rechargeable Lithium Battery

Some embodiments provide a rechargeable lithium battery including the aforementioned positive electrode, negative electrode, and electrolyte. The aforementioned positive electrode active material may be applied not only to lithium ion batteries but also to all-solid-state rechargeable batteries. For example, a rechargeable lithium battery includes a positive electrode, a negative electrode, a separator between the positive electrode and the negative electrode, and an electrolyte, and in some embodiments, an all-solid-state rechargeable battery including the positive electrode, the negative electrode, and a solid electrolyte layer between the positive electrode and the negative electrode. Below, for convenience, the configuration of a lithium-ion battery using an electrolyte will be described in detail.

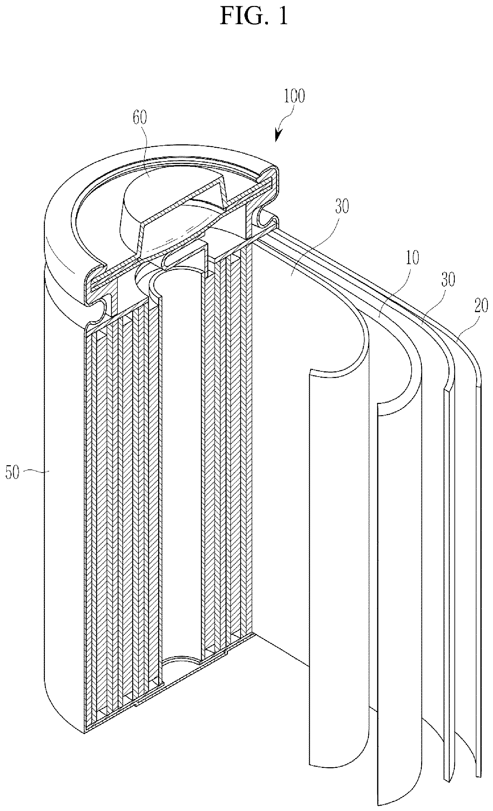

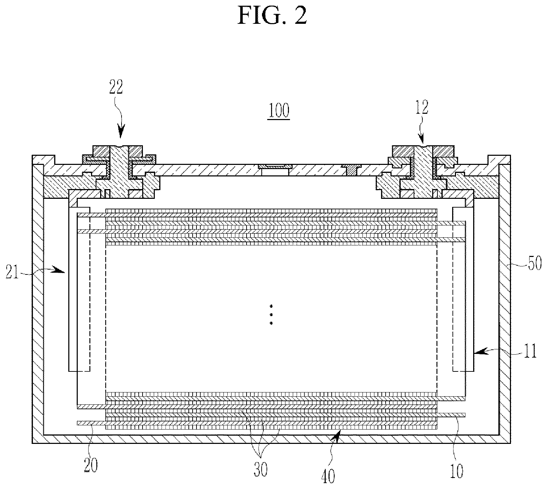

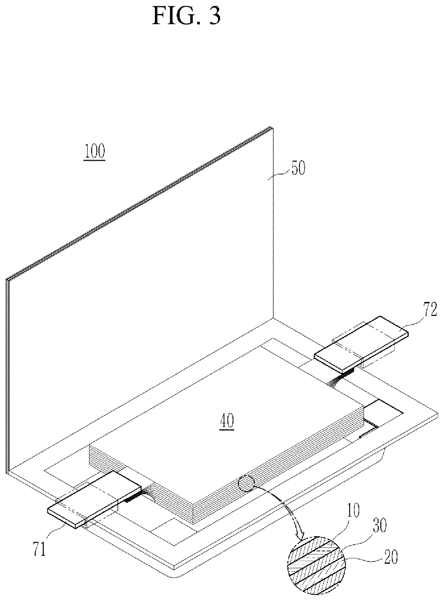

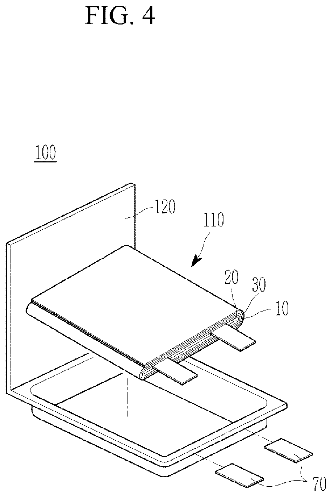

The rechargeable lithium battery may be classified into cylindrical, prismatic, pouch, coin, etc. depending on the shape. FIGS. 1 to 4 are schematic views showing the rechargeable lithium battery according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to some embodiments may be charged at a high voltage or appropriately driven at the high voltage and thus exhibit improved characteristics under the high voltage condition.

In order to use reversible positive electrode capacity of the positive electrode active material of a lithium-manganese-rich material, initial charging needs to be performed at about 4.60 V or more, for example, at about 4.65 V. Then, subsequent charging may be performed at a lower voltage range than the initial charge voltage, wherein because the rechargeable lithium battery according to some embodiments is designed to be driven in a high voltage region, the subsequent charging may proceed in a voltage range of about 4.3 V or more. For example, after the second cycle, a charge voltage may be about 4.3 V or more, for example, about 4.3 V to about 4.6 V, about 4.3 V to about 4.55 V, or about 4.4 V to about 4.50 V. The rechargeable lithium battery, to which the positive electrode active material according to some embodiments is applied, although charged at a high voltage, may realize high capacity and long cycle-life characteristics.

On the other hand, in general, there is a problem that as O-redox is more expressed, an average discharge voltage decreases after the O-redox activation, but in the positive electrode active material according to some embodiments, proportion of O-redox is appropriately controlled, increasing the average discharge voltage. For example, the rechargeable lithium battery according to some embodiments may have an average discharge voltage (vs. Li/Li⁺) of greater than or equal to about 3.8 V, for example, greater than or equal to about 3.83 V or greater than or equal to about 3.84 V. Herein, the average discharge voltage may mean an average discharge voltage, which is measured at the second cycle by using a positive electrode to which the positive electrode active material according to some embodiments is applied to manufacture a half-cell, initially charging and discharging the half-cell to a voltage of about 4.60 V or more and then, secondarily charging and discharging the half-cell at a lower voltage range than the 4.60 V. The average discharge voltage may be, for example, calculated by dividing an integral of an area under a curve in a voltage-capacity graph by discharge capacity.

### Negative Electrode

The negative electrode may include a current collector and a negative electrode active material layer on the current collector, and the negative electrode active material layer may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x<2). At this time, the atomic content ratio of Si:O, which indicates a degree of oxidation, may be about 99:1 to about 33:67. As used herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

### (1) Preparation of First Positive Electrode Active Material Large Particles

Ni_{0.5}Mn_{0.5}(OH)₂ and LiOH were mixed to have a molar ratio of Li/(Ni+Mn) of about 1.12 and then, heat-treated at 1000 °C for 24 hours under an oxygen atmosphere to prepare a first positive electrode active material including a lithium-manganese-rich composite oxide (Li_{1.06}(Ni_{0.5}Mn_{0.5})_{0.94}O₂) in the form of secondary particles with an average particle diameter (D₅₀) of about 7 µm.

### (2) Preparation of Second Positive Electrode Active Material Small Particles

Ni_{0.35}Mn_{0.65}CO₃ and LiOH were mixed to have a molar ratio of Li/(Ni+Mn) of about 1.35 and then, heat-treated at 900 °C for 24 hours to prepare a second positive electrode active material including a lithium-manganese-rich composite oxide (Li_{1.15}(Ni_{0.35}Mn_{0.65})_{0.85}O₂) in the form of secondary particles with an average particle diameter (D₅₀) of about 3.3 µm.

### (3) Preparation of Mixed Positive Electrode Active Material

80 wt% of the first positive electrode active material, large particles, and 20 wt% of the second positive electrode active material, small particles, were mixed to prepare a mixed positive electrode active material having a final composition of Li/(Ni+Mn) = 1.17 and Ni:Mn = 47:53.

### 2. Manufacturing of Rechargeable Lithium Battery Cell (Half-cell)

92 wt% of the prepared positive electrode active material, 4 wt% of a polyvinylidene fluoride binder, and 4 wt% of a carbon nanotube conductive material were mixed to prepare positive electrode active material layer slurry, and the slurry was coated on an aluminum foil current collector and then, dried and compressed to manufacture a positive electrode. At this time, a loading level of the positive electrode active material layer was 10 mg/cm², and a density of the final rolled positive electrode was about 3.5 g/cc.

The positive electrode was used with a lithium counter electrode as a negative electrode, a polytetrafluoroethylene separator, and an electrolyte solution prepared by dissolving 1 M LiPF₆ in a mixed solvent of ethylene carbonate, ethylmethyl carbonate, and dimethyl carbonate in a volume ratio of 2:4:4 and then, adding 1.5 wt% of vinylene carbonate thereto, manufacturing a rechargeable lithium battery cell in a common method.

### Example 2

A rechargeable lithium battery cell was manufactured substantially in the same manner as in Example 1 except that a first positive electrode active material having a composition of Li_{1.06}(Ni_{0.5}Mn_{0.5})_{0.94}O₂ and an average particle diameter (D₅₀) of about **10** µm and a second positive electrode active material having a composition of Li_{1.15}(Ni₀.₃₅Mn_{0.65})₀.₈₅O₂ and an average particle diameter (D₅₀) of about **6.5** µm were mixed in a weight ratio of 8:2 to prepare a positive electrode active material.

### Comparative Example 1

A rechargeable lithium battery cell was manufactured substantially in the same manner as in Example 1 except that a positive electrode active material having a composition of Li/(Ni+Mn)=1.17 and Ni:Mn=47:53 and an average particle diameter (D₅₀) of about 6.11 µm alone was used.

### Comparative Example 2

A rechargeable lithium battery cell was manufactured substantially in the same manner as in Example 1 except that a first positive electrode active material having a composition of Li_{1.15}(Ni₀.₃₅Mn_{0.65})₀.₈₅O₂ and an average particle diameter (D₅₀) of about 6.5 µm and a second positive electrode active material having a composition of Li_{1.15}(Ni₀.₃₅Mn_{0.65})₀.₈₅O₂ and an average particle diameter (D₅₀) of about 3.3 µm were mixed in a weight ratio of 8:2 to prepare a positive electrode active material.

### Comparative Example 3

A rechargeable lithium battery cell was manufactured substantially in the same manner as in Example 1 except that a first positive electrode active material having a composition of Li_{1.06}(Ni_{0.66}Mn_{0.34})_{0.94}O₂ and an average particle diameter (D₅₀) of about 10 µm and a second positive electrode active material having a composition of Li_{1.06}Ni_{0.75}Mn_{0.25}O₂ and an average particle diameter (D₅₀) of about 3.5 µm were mixed in a weight ratio of 7:3 to prepare a positive electrode active material having a final composition of Li/(Ni+Mn)=1.1 and Ni:Mn=69:31.

### Comparative Example 4

A rechargeable lithium battery cell was manufactured substantially in the same manner as in Example 1 except that a first positive electrode active material having a composition of Li_{1.03}Ni_{0.75}Mn_{0.25}O₂ and an average particle diameter (D₅₀) of about 9 µm and a second positive electrode active material having a composition of Li_{1.06}Ni_{0.75}Mn_{0.25}O₂ and an average particle diameter (D₅₀) of about 3.5 µm were mixed in a weight ratio of 8:2 to prepare a positive electrode active material.

### Evaluation Example 1: Evaluation of Initial Charge/discharge Capacity, Initial Charge/discharge Efficiency, Average Voltage, Pellet Density, and Capacity per Volume

The battery cells, to which a lithium-manganese-rich material was applied, were initially charged at 4.65 V and then, at 4.45 V lowered therefrom.

The rechargeable lithium battery cells of Examples 1 to 2 and Comparative Examples 1 to 4 were charged to 4.65 V at a constant current of 0.1 C, subsequently, maintained at the voltage until the current reached 0.05 C, and then, discharged to 2.5 V at the constant current of 0.1 C for first charging and discharging. Subsequently, the cells were charged to 4.45 V at the constant current of 0.2 C, subsequently maintained at the voltage until the current reached 0.05 C, and discharged to 2.5 V at the constant current of 0.2 C at 25 °C for second charging and discharging. At the second charging and discharging cycle, initial charge capacity, initial discharge capacity, and a ratio of the latter to the former as efficiency are shown in Tables 1 and 2.

In all the evaluation examples, the cells to which a mixed positive electrode active material was applied, the cells to which the first positive electrode active material alone was applied, and the cells to which the second positive electrode active material alone was applied in the examples and the comparative examples were equally evaluated, and the results are shown in Tables 1 and 2.

In addition, each of the examples and the comparative examples was evaluated with respect to an average voltage (V vs. Li/Li⁺) at the initial discharge (discharge at the second cycle), and the results are shown in Tables 1 and 2. In Tables 1 and 2, Me= Ni+Mn. The average voltage was obtained by integrating an area under a discharge voltage curve (a voltage-capacity graph) after the initial charging and discharging of the cells and then, dividing the integral by discharge capacity.

Each of the positive electrode active materials of the examples and the comparative examples were measured with respect to pellet density after pressurizing it at 3.3 tons for 30 seconds. In addition, capacity per volume is a product of the initial discharge capacity and the pellet density.

**(Table 1)**

| | | | Charge (mAh/g) | Discharge (mAh/g) | Efficiency (%) | Average voltag e (V) | P/D (g/c c) | Capacity per volume (mAh/c c) |
|---|---|---|---|---|---|---|---|---|
| Examp le 1 | large partic les | Li/Me=1.12, Ni:Mn=50:50, 7µm | 203.4 | 199.8 | 98.2 | 3.887 | 2.81 | 561.4 |
| | small partic les | Li/Me=1.35, Ni:Mn=35:65, 3.3µm | 222.3 | 218.2 | 98.1 | 3.734 | 2.41 | 525.9 |
| | mixtu re | 8:2 (Li/Me=1.17, Ni:Mn=47:53) | 204.8 | 202.9 | 99.1 | 3.848 | 2.90 | 588.8 |
| Examp le 2 | large partic les | Li/Me=1.12, Ni:Mn=50:50, 10µm | 198.7 | 192.7 | 97.0 | 3.890 | 2.92 | 562.7 |
| | small partic les | Li/Me=1.35, Ni:Mn=35:65, 6.5µm | 228.6 | 225.8 | 98.7 | 3.719 | 2.60 | 587.1 |
| | mixtu re | 8:2 (Li/Me=1.17, | 201.9 | 196.3 | 97.2 | 3.843 | 3.02 | 592.7 |
| | | Ni:Mn=47:53) | | | | | | |
| Compa rative Examp le 1 | alone | Li/Me=1.17, Ni:Mn=47:53, 6.11µm | 194.9 | 196.2 | 100. 7 | 3.827 | 2.63 ( ↓ ) | 516.0 ( ↓ ) |

**(Table 2)**

| | | | Charge (mAh/g) | Dischar ge (mAh/g) | Effici ency (%) | Avera ge voltag e (V) | P/D (g/c c) | Capaci ty per volume (mAh/c c) |
|---|---|---|---|---|---|---|---|---|
| Compa rative Examp le 2 | large partic les | Li/Me=1.35, Ni:Mn=35:65, 6.5µm | 228.6 | 225.8 | 98.7 | 3.719 | 2.60 | 587.1 |
| | small partic les | Li/Me=1.35, Ni:Mn=35:65, 3.3µm | 222.3 | 218.2 | 98.1 | 3.734 | 2.41 | 525.8 |
| | mixtu re | 8:2 | 223.0 | 223.1 | 100. 0 | 3.719 | 2.59 ( ↓ ) | 577.9 ( ↓ ) |
| Compa rative | large partic | Li/Me=1.12, Ni:Mn=66:34, | 209.6 | 202.8 | 96.8 | 3.902 | 2.95 | 598.3 |
| Examp le 3 | les | 10µm | | | | | | |
| | small partic les | Li/Me=1.06, Ni:Mn=75:25, 3.5µm | 231.3 | 200.9 | 86.9 | 3.935 | 3.18 | 638.9 |
| | mixtu re | 7:3 (Li/Me=1.10, Ni:Mn=69:31) | 200.2 | 192.9 ( ↓ ) | 96.4 | 3.904 | 3.18 ( ↓ ) | 613.4 ( ↓ ) |
| Compa rative Examp le 4 | large partic les | Li/Me=1.03, Ni:Mn=75:25, 9µm | 230.7 | 203.0 | 88.0 | 3.900 | 3.00 | 609 |
| | small partic les | Li/Me=1.06, Ni:Mn=75:25, 3.5µm | 236.0 | 217.3 | 92.1 | 3.901 | 2.83 | 614.9 |
| | mixtu re | 8:2 | 229.2 | 201.6 ( ↓ ) | 88.0 | 3.915 | 3.15 | 635.2 |

Referring to Table 1, Example 1, in which large and small particles were mixed, exhibited high initial discharge capacity, which is similar to an arithmetic prediction value of 80% of the initial discharge capacity of the large particles and 20% of the initial discharge capacity of the small particles, and also, increased density, compared with each density of the large particles and the small particles, and thereby, significantly increased capacity per volume.

Example 2, in which large and small particles were mixed, also exhibited high initial discharge capacity, which is similar to an arithmetic prediction value, and also, increased density, compared with each density of the large particles and the small particles, and thereby, significantly increased capacity per volume.

Comparative Example 1, which had the same final composition as those of Examples 1 and 2 but to which a positive electrode active material with a size of 6.11 µm alone was applied, exhibited lower or similar initial discharge capacity to Examples 1 and 2, which was confirmed to be very disadvantageous in terms of capacity per volume.

In Table 2, Comparative Example 2, in which large and small particles were lithium-manganese-rich-based and had the same composition, exhibited no increase in density.

Comparative Example 3, to which not lithium-manganese-rich-based but lithium nickel-manganese-based composite oxide were applied as small particles, exhibited no increase in initial discharge capacity and no increase in density according to the mixing.

Comparative Example 4, to which large and small particles were not lithium-manganese-rich-based, but to which lithium nickel-manganese-based composite oxide was applied, exhibited rather decreased initial discharge capacity according to the mixing.

### Evaluation Example 2: Evaluation of High-temperature Cycle-life Characteristics

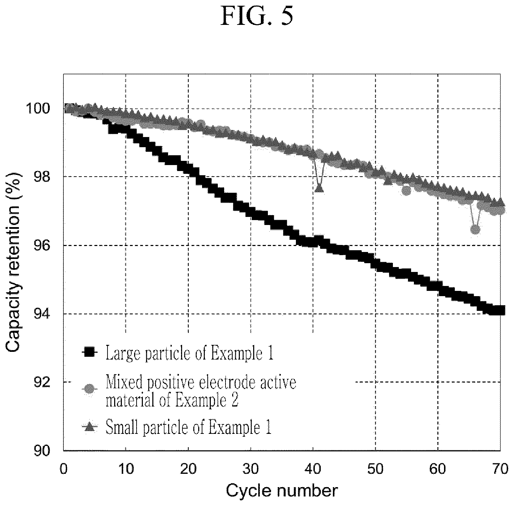

As for the cell of Example 1 to which the mixed positive electrode active material was applied, the cell to which the first positive electrode active material of Example 1 alone was applied, and the cell to which the second positive electrode active material of Example 1 alone was applied, after equally performing the first and second charging and discharging as in Evaluation Example 1, each of the cells were repeatedly 70 times or more charged and discharged within a voltage range of 2.5 V to 4.45 V at 1.0 C, at 45 °C to measure capacity retention according to the number of cycles, that is, a ratio of discharge capacity at each cycle to the initial discharge capacity (discharge capacity at the second cycle), which is shown in FIG. 5.

Referring to FIG. 5, the cell of Example 1 exhibited significantly improved cycle-life characteristics, compared with the case of applying the first positive electrode active material alone, and in addition, compared with the case of applying the second positive electrode active material, small particles, alone, the cell of Example 1 included 20 wt% of small particles but still exhibited almost equally high cycle-life characteristics.

While this disclosure has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of Symbols>

100: rechargeable lithium battery 10: positive electrode
11: positive electrode lead tab 12: positive electrode terminal
20: negative electrode 21: negative electrode lead tab
22: negative electrode terminal 30: separator
40: electrode assembly 50: case
60: sealing member 70: electrode tab
71: positive electrode tab 72: negative electrode tab

## Claims

1. A positive electrode active material, comprising
a first positive electrode active material including a first lithium-manganese-rich composite oxide in which a molar ratio of lithium to a total metal excluding lithium is 1.06 to 1.2 and a manganese content based on 100 mol% of a total metal excluding lithium is greater than or equal to 30 mol%, and
a second positive electrode active material including a second lithium-manganese-rich composite oxide in which a molar ratio of lithium to a total metal excluding lithium is greater than 1.2 and less than or equal to 2 and a manganese content based on 100 mol% of a total metal excluding lithium is greater than or equal to 30 mol%, and having an average particle diameter (D₅₀) smaller than an average particle diameter (D₅₀) of the first positive electrode active material.

2. The positive electrode active material as claimed in claim 1, wherein
based on a total of 100 wt% of the first positive electrode active material and the second positive electrode active material, the first positive electrode active material is included in an amount of greater than 50 wt% and less than 100 wt% and the second positive electrode active material is included in an amount of greater than 0 wt% and less than 50 wt%, optionally wherein based on a total of 100 wt% of the first positive electrode active material and the second positive electrode active material, the first positive electrode active material is included in an amount of 60 wt% to 95 wt% and the second positive electrode active material is included in an amount of 5 wt% to 40 wt%.

3. The positive electrode active material as claimed in any of claims 1-2, wherein
an average particle diameter (D₅₀) of the first positive electrode active material is greater than or equal to 5 µm and less than or equal to 20 µm,
an average particle diameter (D₅₀) of the second positive electrode active material is greater than or equal to 1 µm and less than or equal to 7 µm.

4. The positive electrode active material as claimed in any of claims 1-3, wherein
the first lithium-manganese-rich composite oxide of the first positive electrode active material has a molar ratio of lithium to a total metal excluding lithium of greater than 1.1 and less than or equal to 1.2,
the second lithium-manganese-rich composite oxide of the second positive electrode active material has a molar ratio of lithium to a total metal excluding lithium of greater than 1.2 and less than or equal to 1.5.

5. The positive electrode active material as claimed in any of claims 1-4, wherein
the first lithium-manganese-rich composite oxide of the first positive electrode active material has a nickel content of greater than or equal to 45 mol% based on 100 mol% of a total metal excluding lithium, and
the second lithium-manganese-rich composite oxide of the second positive electrode active material has a nickel content of less than 45 mol% based on 100 mol% of a total metal excluding lithium.

6. The positive electrode active material as claimed in any of claims 1-5, wherein
the first lithium-manganese-rich composite oxide of the first positive electrode active material has a nickel content of 45 mol% to 70 mol% and a manganese content of 30 mol% to 55 mol% based on total 100 mol% of nickel and manganese, and
the second lithium-manganese-rich composite oxide of the second positive electrode active material has a nickel content of 10 mol% to less than 45 mol% and a manganese content of greater than 55 mol% to 90 mol% based on total 100 mol% of nickel and manganese.

7. The positive electrode active material as claimed in any of claims 1-6, wherein
in an entire mixture of the first positive electrode active material and the second positive electrode active material, a molar ratio of lithium to a total metal excluding lithium is 1.1 to 1.3, and based on total 100 mol% of nickel and manganese, a nickel content is 35 mol% to 65 mol% and a manganese content is 35 mol% to 65 mol%.

8. The positive electrode active material as claimed in any of claims 1-7, wherein
the first lithium-manganese-rich composite oxide of the first positive electrode active material includes at least one of metal oxides represented by Chemical Formula 1 and Chemical Formula 2:
[Chemical Formula 1] Li₁₊ₓ₁(Ni_{y1}Mn_{z1}M¹_{1-y1-z1})₁₋ₓ₁O₂-_{b1}X¹_{b1}
wherein, in Chemical Formula 1, 0.03≤x1≤0.09,0.45≤y1≤0.7, 0.3≤z1≤0.55, and 0≤b1≤0.1, M¹is one or more element selected from Al, B, Ba, Ca, Ce, Cr, Fe, Mg, Mo, Nb, Si, Sn, Sr, Ti, V, W, Y, and Zr, and X¹ is one or more element selected from F, P, and S,
[Chemical Formula 2] (1-x2)(LiNi_{y2}Mn_{z2}M2_{1-y2-z2}O_{2-b2}X²b₂)+x2(Li₂(Mnₜ₁M2₁₋ₜ₁)O_{3-b3}X²b₃)
wherein, in Chemical Formula 2, 0.06≤x2≤0.2, 0.5≤y2≤1.0, 0≤z2≤0.5, 0≤b2≤0.1, 0.9≤t1≤1 and 0≤b3≤0.1, M² is one or more element selected from Al, B, Ba, Ca, Ce, Cr, Fe, Mg, Mo, Nb, Si, Sn, Sr, Ti, V, W, Y, and Zr, and X² is one or more element selected from F, P, and S.

9. The positive electrode active material as claimed in any of claims 1-8, wherein
the second lithium-manganese-rich composite oxide of the second positive electrode active material is represented by at least one of Chemical Formula 3 and Chemical Formula 4:
[Chemical Formula 3] Li1₊ₓ₃(N_{iy3}Mn_{z3}M³_{1-y3-z3})₁₋ₓ₃O_{2-b4}X³_{b4}
wherein, in Chemical Formula 3, 0.09<x3≤0.33, 0.1≤y3<0.45, 0.55<z3≤0.9, and 0≤b4≤0.1, M³ is one or more element selected from Al, B, Ba, Ca, Ce, Cr, Fe, Mg, Mo, Nb, Si, Sn, Sr, Ti, V, W, Y, and Zr, and X³ is one or more element selected from F, P, and S,
[Chemical Formula 4] (1-x4)(LiNi_{y4}Mn_{z4}M⁴_{1-y4-z4}O_{2-b5}X⁴_{b5})+x4(Li₂(Mnₜ₂M⁴₁₋ₜ₂)O_{3-b6}X⁴_{b6})
wherein, in Chemical Formula 4, 0.2<x4≤1, 0.5≤y4≤1.0, 0≤z4≤0.5, 0≤b5≤0.1, 0.9≤t2≤1 and 0≤b6≤0.1, M⁴ is one or more element selected from Al, B, Ba, Ca, Ce, Cr, Fe, Mg, Mo, Nb, Si, Sn, Sr, Ti, V, W, Y, and Zr, and X⁴ is one or more element selected from F, P, and S.

10. The positive electrode active material as claimed in any of claims 1-9, wherein
in each of the first lithium-manganese-rich composite oxide and the second lithium-manganese-rich composite oxide, a cobalt content based on 100 mol% of a total metal excluding lithium is 0 mol% to 1 mol%.

11. The positive electrode active material as claimed in any of claims 1-10, wherein
the first positive electrode active material is in a form of secondary particles made by agglomerating a plurality of primary particles, and
the second positive electrode active material is in a form of secondary particles, single particles, or a combination thereof.

12. The positive electrode active material as claimed in any of claims 1-11, wherein
i) a value obtained by subtracting an average particle diameter (D₅₀) of the second positive electrode active material from the average particle diameter (D₅₀) of the first positive electrode active material is less than or equal to 6 µm and/or ii) a value obtained by subtracting the average particle diameter (D₅₀) of the second positive electrode active material from the average particle diameter (D₅₀) of the first positive electrode active material is 2 µm to 5 µm and/or iii) the positive electrode active material has a pellet density of greater than or equal to 2.9 g/cc.

13. A rechargeable lithium battery, comprising
a positive electrode including the positive electrode active material as claimed in any of claims 1-12,
a negative electrode, and
an electrolyte.

14. The rechargeable lithium battery as claimed in claim 13, wherein
i) the positive electrode has capacity per volume of greater than or equal to 550 mAh/cc and/or
ii) the rechargeable lithium battery has an average discharge voltage of greater than or equal to 3.8 V (vs. Li/Li⁺).

15. An all-solid-state rechargeable battery, comprising
a positive electrode including the positive electrode active material as claimed in any of claims 1-12,
a negative electrode, and
a solid electrolyte layer between the positive electrode and the negative electrode.
